# EUROPÄISCHE PATENTSCHRIFT

(11) **EP 3 017 214 B1**
(45) Veröffentlichungstag und Bekanntmachung des Hinweises auf die Patenterteilung: **19.04.2017**
(21) Anmeldenummer: 14728529.0
(22) Anmeldetag: 03.06.2014
(51) Int. Cl.: F16H 61/02

(54) **HYDRAULISCHE STEUERUNGSEINRICHTUNG FÜR EIN AUTOMATIKGETRIEBE**
HYDRAULIC CONTROL ARRANGEMENT FOR AN AUTOMATIC TRANSMISSION
DISPOSITIF DE COMMANDE HYDRAULIQUE POUR TRANSMISSION AUTOMATIQUE

(30) Priorität: 03.07.2013 DE 102013212947
(43) Veröffentlichungstag der Anmeldung: 11.05.2016
(73) Patentinhaber: ZF Friedrichshafen AG, 88046 Friedrichshafen (DE)
(72) Erfinder: SCHIELE, Peter, 88079 Kressbronn (DE); GETHÖFER, Frank, 88099 Neukirch (DE)
(86) Internationale Anmeldenummer: PCT/EP2014/061427
(87) Internationale Veröffentlichungsnummer: WO 2015/000653

(56) Entgegenhaltungen:
- DE-A1- 19 858 541
- DE-A1-102005 051 606

## Beschreibung

Die Erfindung betrifft eine hydraulische Steuerungseinrichtung nach dem Oberbegriff des unabhängigen Patentanspruchs 1.

Automatikgetriebe weisen zur Darstellung unterschiedlicher Übersetzungsstufen hydraulische Schaltelemente auf, welche mittels einer Druckbeaufschlagung betätigt, d.h. in einen Betriebszustand gebracht werden, in welchem ein Drehmoment über die Schaltelemente übertragbar ist. Hierzu ist ein Zylinderraum mit einem Betriebsmedium zu füllen und anschließend ein Kupplungskolben mit einem Druck des Betriebsmediums zu beaufschlagen. Der zur Befüllung bzw. Druckbeaufschlagung erforderliche Volumenstrom bzw. Druck wird von einer Pumpe erzeugt, welche von einer Antriebsmaschine des Automatikgetriebes angetrieben wird. Die Höhe des Druckes wird von einer Druckstelleinrichtung eingestellt, wobei in dem Hydrauliksystem eines Getriebes unterschiedliche Druckkreise vorhanden sein können. Bei einem Stillstand der Antriebsmaschine bricht die Druckerzeugung zusammen und der Druck im hydraulischen System des Automatikgetriebes sinkt auf null bzw. Umgebungsdruck ab, so auch in den hydraulischen Schaltelementen. Darüber hinaus entleeren sich die Zylinder der Schaltelemente zumindest teilweise, so dass bei einem neuerlichen Starten der Antriebsmaschine zunächst die Zylinder vollständig befüllt werden müssen, bevor wie gewünscht die Schaltelemente betätigt und damit eine Übersetzungsstufe eingelegt werden kann.

Die DE 198 58 541 A1 zeigt eine elektronisch-hydraulische Steuerungseinrichtung eines automatisch zu schaltenden Kraftfahrzeuggetriebes mit hydraulischen betätigbaren Schaltelementen. Die Druckquelle des Hydrauliksystems ist eine Pumpe, welche einen Volumenstrom an Druckmedium bereitstellt, wobei die Höhe des Druckes in dem Druckmedium durch verschiedene als Druckstelleinrichtungen wirkende Ventile eingestellt wird. Die Befüllung eines jeden Schaltelements wird durch das Anheben eines Schaltdruckes ausgelöst, welcher einen Kolbenschieber eines Kupplungsventils in eine Schaltstellung bewegt, in welcher die Kupplung durch das Schaltventil aus letztlich der Druckquelle befüllt wird. Wird die Antriebsmaschine, welche die Pumpe antreibt, abgestellt, und die Steuerungseinrichtung wird drucklos, bewegt sich das Kupplungsventil in eine Stellung, in welcher die hydraulische Verbindung von der Kupplung zur Druckquelle unterbrochen und eine hydraulische Verbindung von der Kupplung zu einem Rückschlagventil hergestellt ist. Das Rückschlagventil verhindert ein Leerlaufen der Kupplung, nachdem sich der Kupplungsdruck infolge des Ausströmens aus der Kupplung durch das Rückschlagventil zu einem drucklosen Raum des Getriebes auf einen bestimmten Restdruckwert verringert hat. Damit wird ein definierter Restdruckwert in der Kupplung eingestellt. Unter einem drucklosen Raum, nachfolgend auch als entlüfteter Bereich bezeichnet, herrscht Umgebungsdruck.

Nachteilig ist hierbei, dass sich der Restdruck in der Kupplung durch die bauartbedingte Spaltleckage allmählich abbauen und sich so die Kupplung entleeren kann, da das Kupplungsventil als Kolbenschieber ausgeführt ist. Zudem besteht die Ventileinrichtung aus einem Kupplungsventil für jedes Schaltelement und dem separaten Rückschlagventil, wodurch eine hohe Teilezahl und ein zusätzlicher Bauraum mit entsprechender Kanalführung erfordert wird.

Die der Erfindung zugrunde liegende Aufgabe ist die Schaffung einer hydraulischen Steuerungseinrichtung zum zuverlässigen Einstellen eines Restdruckes in einem Schaltelement in möglichst einfacher Weise bei geringem baulichen Aufwand und minimalem Raumbedarf.

Diese Aufgabe wird durch die Merkmale des Patentanspruchs 1 gelöst.

Eine hydraulische Steuerungseinrichtung für ein Automatikgetriebe weist mindestens eine Ventileinrichtung auf, wobei die Ventileinrichtung ein Schaltventil, welches ein Schaltglied aufweist, und ein Rückschlagventil umfasst. Das Schaltventil ist hierbei in einem Gehäuse ausgebildet und mit einer ersten und einer zweiten Druckstelleinrichtung sowie einem Schaltelement zur Übertragung eines Drehmoments hydraulisch verbunden, wobei Druckstelleinrichtungen von mindestens einer Pumpe mit einem Druckmedium versorgt werden. Unter der Wirkung eines von der zweiten Druckstelleinrichtung erzeugten Schaltdruckes auf das Schaltglied ist dieses in eine erste Schaltstellung bewegbar ist, in welcher die erste Druckstelleinrichtung durch das Schaltventil mit dem Schaltelement hydraulisch verbunden ist, so dass eine Befüllung des Schaltelements durch die erste Druckstelleinrichtung möglich ist. Bei einem Schaltdruck unterhalb eines bestimmten Wertes befindet sich das Schaltglied in einer zweiten Schaltstellung, in welcher der Zustrom von der ersten Druckstelleinrichtung zum Schaltelement unterbrochen ist. Das Rückschlagventil ist derart angeordnet, dass es in der zweiten Schaltstellung des Schaltgliedes von der Seite des Schaltelements her zu einem entlüfteten Bereich der hydraulischen Steuerungseinrichtung hin durchströmbar ist. Unter einem entlüfteten Bereich ist hierbei ein Bereich der hydraulischen Steuerungseinrichtung zu verstehen, in welchem Umgebungsdruck herrscht. Erfindungsgemäß ist das Schaltventil als Wegesitzventil ausgebildet ist. Unter einem Wegesitzventil ist ein Sitzventil zu verstehen, das in unterschiedliche Schaltstellungen schaltbar ist.

Vorteilhafterweise weist ein Sitzventil eine hohe Dichtigkeit bei einfachem Aufbau auf, im Gegensatz zu einem Schieberventil, welches aufgrund bauartbedingter Spaltleckagen prinzipiell undicht ist.

Vorteilhafte Ausgestaltungen der Erfindung ergeben sich aus den Unteransprüchen.

In der hydraulischen Steuerungseinrichtung ist das Rückschlagventil in dem Schaltglied des Schaltventils angeordnet. Ein Vorteil dieser Integration des Rückschlagventils in das Schaltventil ist ein geringer Platzbedarf, bzw. Bauraum.

In einer bevorzugten Ausgestaltung der Erfindung ist es möglich, dass das Schaltglied als Sitzkolben ausgebildet ist, welcher einen ersten und einen zweiten zylindrischen Kolbenabschnitt (aufweist, wobei der erste Kolbenabschnitt einen kleineren Durchmesser als der zweite Kolbenabschnitt aufweist. Aus der Differenz beider Durchmesser ergibt sich zwischen den Kolbenabschnitten sich eine sich radial ausdehnende Ringfläche, welche eine Schaltdruckfläche bildet.

In diesem Zusammenhang ist es möglich, dass der Sitzkolben in einer in dem Gehäuse ausgebildeten Stufenbohrung axial verschiebbar geführt ist, wobei der Sitzkolben in der ersten Schaltstellung mit einem ersten Ende an einem Anschlag anliegt und in der zweiten Schaltstellung mit einem zweiten Ende an einem in dem Gehäuse ausgebildeten Ventilsitz anliegt. Hierbei ist die Stufenbohrung im Wesentlichen radial mindestens von einem Kupplungskanal, einem Versorgungskanal und einem Schaltdruckkanal durchdrungen. Der Schaltdruckkanal ist so angeordnet, dass die Schaltdruckfläche des Sitzkolbens in jeder axialen Stellung des Sitzkolbens vom dem im Schaltdruckkanal wirkenden Schaltdruck beaufschlagbar ist.

Darüber hinaus ist es möglich, dass das Schaltventil neben dem Sitzkolben eine Druckfeder umfasst, welche zwischen dem Sitzkolben und dem mit dem Gehäuse fest verbundenen Anschlag angeordnet ist, wobei bei einer Druckbeaufschlagung der Schaltdruckfläche durch den Schaltdruck das Schaltglied in Richtung einer Mittelachse des Schaltventils entgegen der Kraft einer Schaltventilfeder gegen den gehäusefesten Anschlag in die erste Schaltstellung verschiebbar ist, und wobei bei einem drucklosen Schaltdruckkanal der Sitzkolben aufgrund der Kraft der Schaltventilfeder die zweite Schaltstellung einnimmt.

Eine vorteilhafte Ausgestaltung zeigt, dass das Rückschlagventil als Sitzventil ausgebildet ist, wobei dieses einen Rückschlagventil-Sitzkolben und eine Rückschlagventilfeder aufweist. Die Rückschlagventilfeder ist zwischen einem Rückschlagventilanschlag und dem Rückschlagventil-Sitzkolben angeordnet, wodurch eine Schließkraft auf den Rückschlagventil-Sitzkolben in Richtung eines Rückschlagventilsitzes wirksam ist.

In einer vorteilhaften Variante der hydraulischen Steuerungseinrichtung sind der Rückschlagventilanschlag und der Rückschlagventilsitz im Sitzkolben des Schaltventils ausgebildet.

In einer möglichen Ausgestaltung nimmt der Sitzkolben des Schaltventils nur dann die zweite Schaltstellung ein, wenn die zweite Druckstelleinrichtung entlüftet ist. Die hydraulische Steuerungseinrichtung ist dabei so ausgebildet, dass in der zweiten Schaltstellung oberhalb eines bestimmten Kupplungsdruckwertes von dem Schaltelement ausgehend das Rückschlagventil entweder zur drucklosen zweiten Druckstelleinrichtung oder, falls diese drucklos ist, zur ersten Druckstelleinrichtung hin durchströmbar ist. Gegen eine Strömung von der durch das Rückschlagventil anströmbaren Druckstelleinrichtung zum Schaltelement hin ist das Rückschlagventil gesperrt.

In einer möglichen Ausgestaltung ist in der zweiten Schaltstellung des Schaltventils das Schaltelement durch das vom Schaltelement aus durchströmbare Rückschlagventil und einen im Schaltglied ausgebildeten Verbindungskanal mit der zweiten, entlüfteten Druckstelleinrichtung hydraulisch verbunden.

In einer alternativen Ausgestaltung ist in der zweiten Schaltstellung des Schaltventils das Schaltelement durch das vom Schaltelement aus durchströmbare Rückschlagventil und einen im Schaltglied ausgebildeten Verbindungskanal mit der ersten, entlüfteten Druckstelleinrichtung hydraulisch verbunden.

In diesem Zusammenhang ist vorgesehen, dass ein Automatikgetriebe eine erfindungsgemäße bzw. den vorstehenden Ausgestaltungen entsprechende hydraulische Steuerungseinrichtung aufweist.

Ausführungsbeispiele des erfindungsgemäßen Verfahrens sind in den Zeichnungen dargestellt und werden im Folgenden näher beschrieben.

Es zeigen
- Fig. 1: eine schematische Schnittdarstellung einer ersten Variante einer erfindungsgemäßen hydraulischen Steuerungseinrichtung in der zweiten Schaltstellung,
- Fig. 2: eine schematische Schnittdarstellung einer ersten Variante einer erfindungsgemäßen hydraulischen Steuerungseinrichtung in der ersten Schaltsteliung,
- Fig. 3: eine schematische Schnittdarstellung einer zweiten Variante einer erfindungsgemäßen hydraulischen Steuerungseinrichtung mit dem Schaltventil in der zweiten Schaltstellung, und
- Fig. 4: eine schematische Schnittdarstellung einer nicht erfindungsgemäßen hydraulischen Steuerungseinrichtung mit dem Schaltventil in der zweiten Schaltstellung.

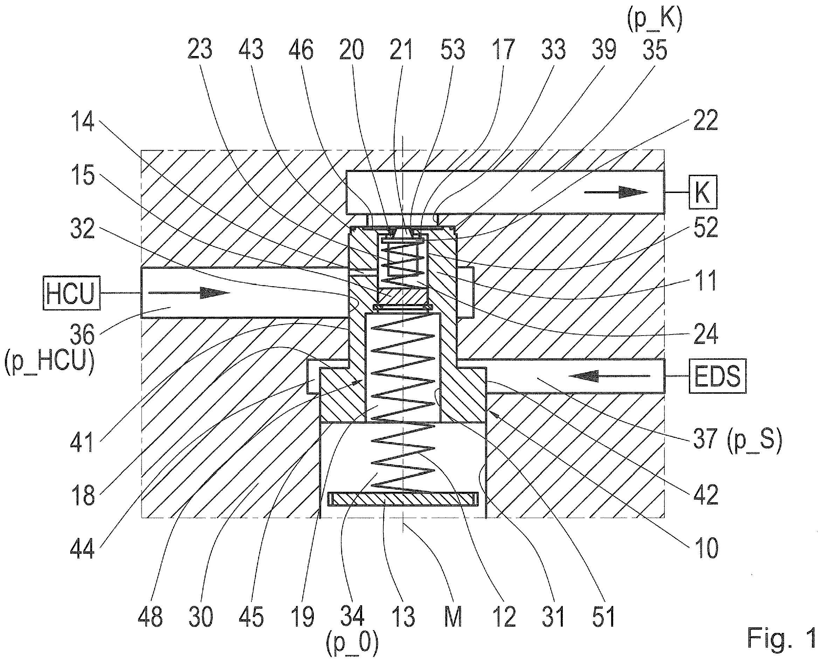

Fig. 1 zeigt die schematische Darstellung der erfindungsgemäßen hydraulischen Steuerungseinrichtung mit einem Schaltventil 10 und einem Rückschlagventil 20 in der ersten Schaltstellung des Schaltventils 10. Das Schaltventil 10 umfasst ein als Sitzkolben 11 ausgebildetes Schaltglied, wobei der Sitzkolben 11 einen ersten zylinderförmigen Kolbenabschnitt 41 und einen zweiten zylinderförmigen Kolbenabschnitt 42 aufweist. Der Durchmesser des ersten Kolbenabschnitts 41 ist hierbei geringer als der des zweiten Kolbenabschnitts 42. Zwischen den Kolbenabschnitten ist ein sich in radialer Richtung erstreckende ringförmige Schaltdruckfläche 18 ausgebildet, deren Fläche sich aus der Differenz der Querschnittsflächen der Kolbenabschnitte 41 und 42 ergibt. Der Sitzkolben 11 ist in einem Gehäuse 30 der hydraulischen Steuerungseinrichtung in einer Stufenbohrung 38, welche einen ersten 31, zweiten 32 und dritten Bohrungsabschnitt 33 aufweist axial, d.h. konzentrisch zu einer Mittelachse M, geführt. Das Gehäuse der hydraulischen Steuerungseinrichtung kann hierbei vom dem Getriebegehäuse, einem Gehäuse einer elektrohydraulischen Steuerungseinheit oder einem beliebigen Getriebebauteil gebildet werden. Vorzugsweise kann das Gehäuse der hydraulischen Steuerungsvorrichtung auch von einer Zuführleitung zu einem Schaltelement zur Zuleitung eines Druckmediums in das Schaltelement gebildet werden.

Die Begriffe axial und radial beziehen sich in diesem Zusammenhang immer auf die Mittelachse M. Die Stufenbohrung 38 wird im Bereich des ersten Bohrungsabschnitts 31, welcher den größten Durchmesser aller Bohrungsabschnitte aufweist, von einem Schaltdruckkanal 37 im Wesentlich radial, d.h. etwa senkrecht zur Mittelachse M durchdrungen. Hierdurch wird ein Druckraum 44 gebildet, in welchem der erste Bohrungsabschnitt 31 in den zweiten Bohrungsabschnitt 32 übergeht. Der Schaltdruckkanal verbindet die hydraulische Steuerungseinrichtung mit einer ersten Druckstelleinrichtung, und zwar einer Schaltdrucksteuerung EDS (nachfolgend auch mit EDS abgekürzt). Sowohl in dem Druckraum 44 als auch dem Schaltdruckkanal 37 herrscht ein Schaltdruck p_S. Durch den dritten Bohrungsabschnitt 33, dessen Durchmesser kleiner ist als der des zweiten Bohrungsabschnitts 32, wird zwischen den beiden Bohrungsabschnitten 32 und 33 eine Ringfläche gebildet, welche sich radial erstreckt. Diese Ringfläche bildet einen Ventilsitz 39. Am Ende der Stufenbohrung 38 wird deren dritter Bohrungsabschnitt 33 von einem Kupplungskanal 35, durch welchen die hydraulische Steuerungseinrichtung mit einem Schaltelement, in diesem Falle einer Kupplung K, verbunden ist im Wesentlichen senkrecht zur Mittelachse M durchdrungen. Sowohl in dem Kupplungskanal 35 als auch der Kupplung K herrscht ein Kupplungsdruck p_K. Der zweite Bohrungsabschnitt 32 wird von einem Versorgungskanal 36 im Wesentlichen senkrecht zur Mittelachse M durchdrungen, durch welchen die Kupplung K aus einer als zweiten Druckstelleinrichtung wirkenden elektrohydraulischen Steuerungseinheit HCU (nachfolgend mit HCU abgekürzt) mit einem Druckmedium versorgt werden kann. In dem Versorgungsdruckkanal 36 herrscht ein von der HCU eingestellter Steuerdruck p_HCU. Während der hydraulischen Verbindung zwischen der HCU und der Kupplung K entspricht die Höhe des Kupplungsdrucks p_K dem Steuerdruck p_HCU.

Der Sitzkolben 11 wird in axialer Richtung von einer Stufenbohrung 48 durchdrungen, welche von drei Bohrungsabschnitten 51, 52 und 53 mit unterschiedlichen Durchmessern gebildet wird. Der Bohrungsabschnitt 51 weist den größten Durchmesser auf und ist zu einem ersten Sitzkolbenende 45 hin geöffnet. Der Bohrungsabschnitt 51 bildet einen Federraum 19, welcher sich innerhalb des ersten und zweiten Kolbenabschnitts 41 und 42 erstreckt und in welchem eine Druckfeder 12 anordenbar ist. Vom dem sich an den Federraum 19 anschließenden Bohrungsabschnitt 52 wird im zweiten Kolbenabschnitt 42 ein Rückschlagventilraum 24 radial begrenzt. An einem zweiten Sitzkolbenende 46 öffnet sich die Stufenbohrung 48 in dem dritten Bohrungsabschnitt 53. Der Übergang von dem dritten Bohrungsabschnitt 53 zum zweiten Bohrungsabschnitt 52 bildet eine sich radial erstreckende Ringfläche als Differenz zwischen den Durchmessern vom zweiten 52 und dritten Bohrungsabschnitt 53. Diese Ringfläche bildet einen Rückschlagventilsitz 17.

Das Rückschlagventil 20 umfasst einen Rückschlagventilkolben 21 und eine Rückschlagventilfeder 23. Der Rückschlagventilkolben 21 ist ein zylinderförmig ausgebildeter Körper, welcher in einer bestimmten Stellung an dem Rückschlagventilsitz 17 anliegt und hierbei die von dem dritten Bohrungsabschnitt 53 in dem zweiten Sitzkolbenende 46 gebildete Öffnung verschließt. Alternativ zu der Zylinderform kann der Rückschlagventilkolben auch kugelförmig ausgebildet sein. Das Gehäuse des Rückschlagventils 20, welches den Rückschlagventilraum 24 einschließt, wird von dem Sitzkolben 11 und einem Rückschlagventilanschlag 15 gebildet. Der Rückschlagventilanschlag 15 ist in dem Sitzkolben 11 befestigt bzw. fest mit diesem verbunden. Der Rückschlagventilanschlag 15 ist derart in die Stufenbohrung 48, bzw. den Sitzkolben 11 eingesetzt, dass der Rückschlagventilraums 24 und der Federraum 19 gegeneinander abgedichtet sind. Grundsätzlich muss der Rückschlagventilanschlag 15 kein separates Bauteil sein, welches einen Montagevorgang bzw. Einpressvorgang erfordert, sondern kann auch durch eine entsprechende Bearbeitung, wie beispielsweise die Fertigung des Federraums 19 und des Rückschlagventilraums 24 durch eine Bearbeitung des Sitzkolbens 11 von jeweils einem Ende her, gebildet werden. Die Rückschlagventilfeder 23 ist zwischen dem Rückschlagventilanschlag 15 und dem Rückschlagventilkolben 21 angeordnet. Die Länge der Rückschlagventilfeder 23 ist so gewählt, dass diese bereits vorgespannt ist, wenn der Rückschlagventilkolben 21 am Rückschlagventilsitz 17 anliegt. Der Sitzkolben 11 weist einen radial gerichteten Verbindungskanal 14 auf, durch welchen der Rückschlagventilraum 24 mit der äußeren Umgebung des Sitzkolbens 11 bzw. des Kolbenabschnitts 41 verbunden ist.

In der in Fig.1 dargestellten Position des Wegesitzventils 10 und des Rückschlagventils 20 ist die hydraulische Verbindung zwischen der elektrohydraulische Steuerungseinheit HCU und der Kupplung K unterbrochen, womit das Schaltventil seine zweite Schaltstellung einnimmt. Der Sitzkolben 11 wird von der Druckfeder 12 mit einem Ende 45 gegen den Ventilsitz 39 gedrückt, wobei die Druckfeder 12 zwischen dem Sitzkolben 11 und einem gehäusefesten Anschlag 13 vorgespannt ist. Im Gegensatz zum Rückschlagventilanschlag 15 ist der Anschlag 13 für das Betriebsmedium durchlässig. Zwischen dem Sitzkolben 11 und dem Anschlag 13 ist ein Entlüftungsraum 34 ausgebildet, welcher üblicherweise durch den Anschlag 13 mit einem Bereich der hydraulischen Steuerungseinrichtung verbunden ist, in welchem allgemein ein Druck herrscht, der kleiner ist als der Schaltdruck p_S. In den meisten Fällen, so auch in der vorliegenden Ausführung, herrscht dort ein Entlüftungsdruck p_0, welcher dem Umgebungsdruck entspricht. Der Rückschlagventil-Sitzkolben 21 liegt am Rückschlagventilsitz 17 an, so dass das Rückschlagventil 20 geschlossen ist.

Die dargestellte zweite Schaltstellung wird dann von dem Sitzkolben 11 eingenommen, wenn zumindest der Schaltdruckkanal 37 drucklos ist (Schaltdruck p_S = p_0), bzw. wenn der Schaltdruck p_S so gering ist, dass die über die Schaltdruckfläche 18 auf den Sitzkolben 11 wirkende Druckkraft kleiner ist als die Vorspannkraft der Druckfeder 12, welche den Sitzkolben 11 gegen den Ventilsitz 39 drückt. Ist auch der Versorgungsdruckkanal 36 drucklos (Steuerdruck p_HCU = p_0), so wirkt der Kupplungsdruck p_K ab einem bestimmten Kupplungsdruckwert p_K*, welcher von der Schließkraft der Rückschlagventilfeder bestimmt wird, öffnend auf das Rückschlagventil 20, welches aufgrund seiner Anordnung und Ausgestaltung nur eine Durchströmung von der Kupplung K weg zur elektrohydraulischen Steuerungseinheit HCU hin zulässt. Die Kupplung K ist dann durch den Kupplungskanal 35, den Bohrungsabschnitt 33, den Rückschlagventilraum 24, den Verbindungskanal 14 und den Versorgungsdruckkanal 36 mit der entlüfteten HCU verbunden, so dass der Kupplungsdruck p_K auf einen dem Kupplungsdruckwert p_K* entsprechenden Restdruckwert absinkt.

Sollte die Kupplung K in der gezeigten Position des Sitzkolbens 11 drucklos (Kupplungsdruck p_K = p_0) oder nicht mit einem Betriebsmedium gefüllt sein, kann diese auch bei vorhandenem Steuerdruck p_HCU nicht aus der elektrohydraulischen Steuerungseinheit HCU befüllt werden, da das Rückschlagventil 20 in diese Strömungsrichtung sperrt und keine Durchströmung zulässt.

Kommt es beispielsweise beim Abstellen des Antriebsmotors des Fahrzeugs zum Stillstand der von dem Motor angetriebenen Pumpe P, werden sowohl der Versorgungsdruckkanal 36 als auch der Schaltdruckkanal 37 entlüftet, d.h. sowohl der Steuerdruck p_HCU als auch der Schaltdruck p_S entsprechen dem Umgebungsdruck p_0.

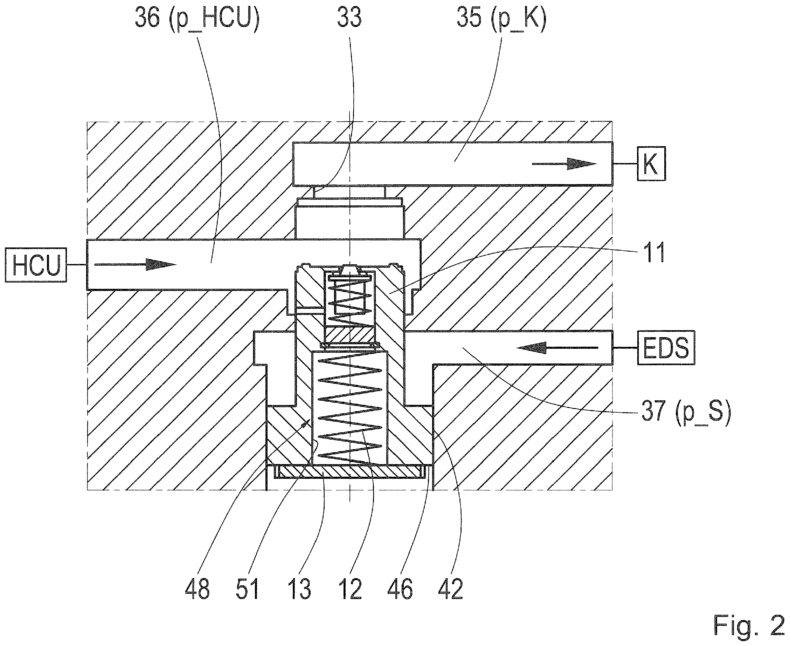

Unter der Wirkung des Schaltdrucks p_S nimmt der Sitzkolben 11 die in Fig.2 dargestellte Position ein. Die HCU und die Kupplung K, bzw. der Versorgungsdruckkanal 36 und der Kupplungskanal 35 sind durch den Bohrungsabschnitt 33 miteinander verbunden, so dass die Kupplung K aus der HCU befüllt und mit dem Steuerdruck p_HCU beaufschlagt wird, so dass der Kupplungsdruck p_K dem Steuerdruck p_HCU entspricht. Der Sitzkolben 11 liegt dabei mit einem Sitzkolbenende 46 an dem Anschlag 13 an. Soll der Sitzkolben 11 wieder in die in Fig.1 gezeigte Position bewegt werden, ist der Schaltdruckkanal 37 zu entlüften (Schaltdruck p_S = p_0), oder der Schaltdruck p_S zumindest so weit abzusenken, dass die Kraft der Druckfeder 12 die hydraulische Kraft aus dem Steuerdruck p_S übersteigt. Wird zusätzlich zu dem Schaltdruckkanal 37 auch der Versorgungsdruckkanal 36 entlüftet (p_S = p_HCU = p_0) entweicht das in der Kupplung K bzw. dem Kupplungskanal 35 unter Druck stehende Betriebsmedium durch das Rückschlagventil 20 in den entlüfteten Versorgungsdruckkanal 36 und der Kupplungsdruck p_K sinkt auf den Kupplungsdruckwert p_K* ab, welcher von dem Rückschlagventil 20 eingestellt wird.

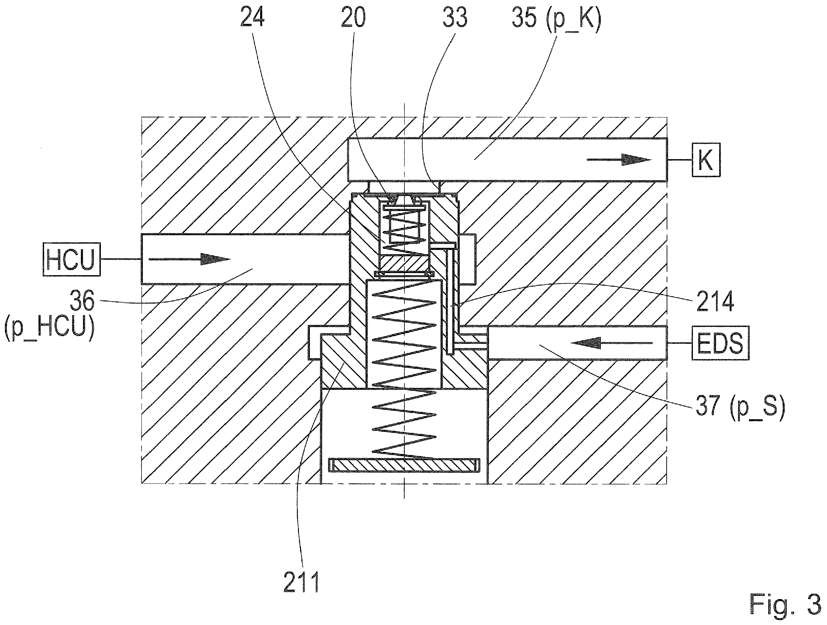

Fig.3 zeigt in schematischer Schnittdarstellung eine alternative Ausgestaltung eines Sitzkolbens 211, wobei sich dieser in einer Position befindet, bei welcher ein Sitzkolbenende 246 an dem Ventilsitz 39 ansteht und die HCU von der Kupplung K trennt. Der Sitzkolben 211 unterscheidet sich von dem Sitzkolben 11 aus den Fig.1 und 2 dadurch, dass der Rückschlagventilraum 24 durch einen Verbindungskanal 214 nicht an der Außenkontur eines Kolbenabschnitts 241, sondern an der Außenkontur eines Kolbenabschnitts 242 in radialer Richtung zu dessen äußerer Umgebung, nämlich in den Schaltdruckkanal 37 mündet. In der gezeigten Position des Sitzkolbens 211 ist der Schaltdruckkanal 37 drucklos (p_S = p_0) oder der Schaltdruck p_S ist zumindest so gering, dass die Kraft einer Druckfeder 212 ausreicht, den Sitzkolben 211 entgegen dem Schaltdruck p_S und dem Kupplungsdruck p_K in die gezeigte Position zu drücken. Ab einem bestimmten Kupplungsdruckwert p_K*, der größer sein muss als der Schaltdruck p_S, wird der Rückschlagventil-Sitzkolben 21 entgegen der Kraft der Rückschlagventilfeder 23 verschoben. Hierdurch ist die Kupplung K durch den Kupplungskanal 35, den Bohrungsabschnitt 33, das Rückschlagventil 20 bzw. den Rückschlagventilraum 24, den Verbindungskanal 214
und den Schaltdruckkanal 37 mit der EDS verbunden, bzw. bei drucklosem Schaltdruckkanal 37 entlüftet (p_K = p_S = p_0).

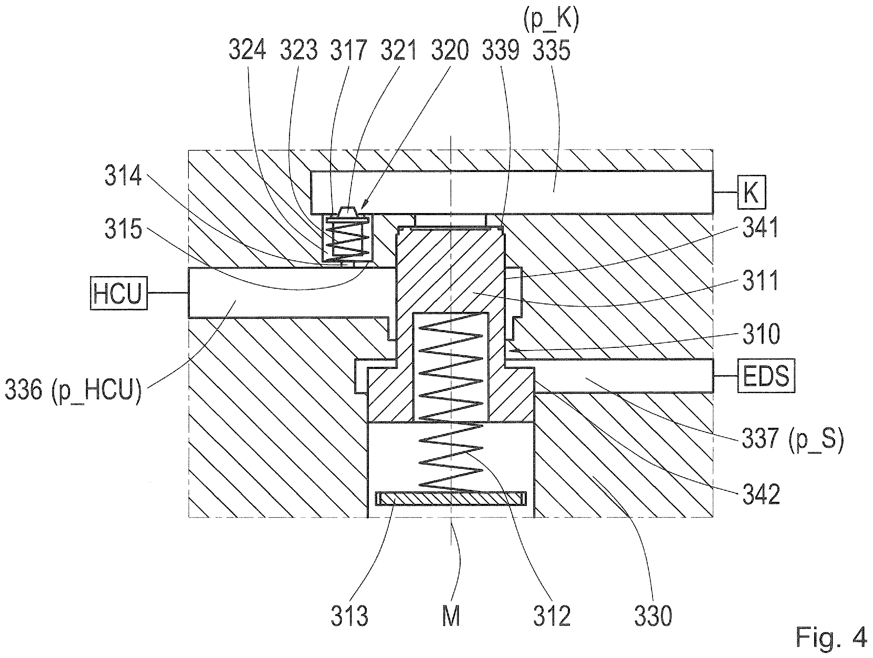

Fig.4 zeigt eine nicht beanspruchte alternative Ausgestaltung einer hydraulischen Steuerungsvorrichtung in einer schematischen Schnittdarstellung. Im Unterschied zu den Sitzkolben 11 bzw. 211 in den Fig.1 bis 3 ist das Rückschlagventil nicht innerhalb des jeweiligen Sitzkolbens, sondern getrennt vom Wegesitzventil in einem Gehäuse 330 angeordnet. Hierdurch ist die Bauweise des Sitzkolbens im Vergleich zu einem Sitzkolben mit integriertem Rückschlagventil einfacher.

Die Außenkontur eines Sitzkolbens 311 mit den Kolbenabschnitten 341 und 342 ist identisch mit der Außenkontur der Sitzkolben 11 und 211 aus den Fig.1 bis 3, und weist eine ebensolche Druckfeder 312 auf, welche zwischen dem Sitzkolben 311 und einem Anschlag 313 eingespannt ist. Zwischen einem Kupplungskanal 335 und einem Versorgungsdruckkanal 336 ist ein Rückschlagventil 320 angeordnet, welches so ausgebildet ist, dass eine Durchströmung nur aus dem Kupplungskanal 335 in den Versorgungsdruckkanal 336 erfolgen kann, sobald der Kupplungsdruck p_K einen Kupplungsdruckwert p_K* übersteigt und der Steuerdruck p_HCU geringer ist als der Kupplungsdruckwert p_K*. Eine Befüllung der Kupplung K aus der HCU ist nur möglich, wenn der Schaltdruck p_S so groß ist, dass dieser den Sitzkolben 311 in eine zweite Position schaltet, in welcher der Versorgungsdruckkanal 336 und der Kupplungskanal 335 durch einen Bohrungsabschnitt 333 miteinander verbunden sind.

Das Rückschlagventil 320 ist im Gehäuse 330 ausgebildet, wobei ein Rückschlagventil-Sitzkolben 321 innerhalb eines beispielsweise als Bohrung ausgebildeten Rückschlagventüraums 324 angeordnet ist. Im drucklosen Zustand der hydraulischen Steuerungseinrichtung wird der Rückschlagventil-Sitzkolben 321 von einer Rückschlagventilfeder 323 gegen einen Rückschlagventilsitz 317 gedrückt. Die Rückschlagventilfeder 323 ist zwischen dem Rückschlagventil-Sitzkolben 321 und einem Rückschlagventilanschlag 315 eingespannt. Durch den Rückschlagventilanschlag 315 hindurch verbindet ein Verbindungskanal 314 den Rückschlagventilraum 324 mit dem Versorgungsdruckkanal 336. Alternativ hierzu könnte das Rückschlagventil auch zwischen dem Kupplungskanal 335 und dem Schaltdruckkanal 337 angeordnet sein.

### Bezugszeichen

- 10: Schaltventil
- 11: Sitzkolben
- 12: Druckfeder
- 13: Anschlag
- 14: Verbindungskanal
- 15: Rückschlagventilanschlag
- 17: Rückschlagventilsitz
- 18: Schaltdruckfläche
- 19: Federraum
- 20: Rückschlagventil
- 21: Rückschlagventil-Sitzkolben
- 22: Dichtelement
- 23: Rückschlagventilfeder
- 24: Rückschlagventilraum
- 30: Gehäuse
- 31: Bohrungsabschnitt
- 32: Bohrungsabschnitt
- 33: Bohrungsabschnitt
- 34: Entlüftungsraum
- 35: Kupplungskanal
- 36: Versorgungsdruckkanal
- 37: Schaltdruckkanal
- 38: Stufenbohrung
- 39: Ventilsitz
- 41: Kolbenabschnitt
- 42: Kolbenabschnitt
- 43: Kolbenabschnitt
- 44: Druckraum
- 45: Sitzkolbenende
- 46: Sitzkolbenende
- 48: Stufenbohrung
- 51: Bohrungsabschnitt
- 52: Bohrungsabschnitt
- 53: Bohrungsabschnitt
- 211: Sitzkolben
- 212: Druckfeder
- 214: Verbindungskanal
- 241: Kolbenabschnitt
- 242: Kolbenabschnitt
- 246: Sitzkolbenende
- 310: Wegesitzventil
- 311: Sitzkolben
- 312: Druckfeder
- 313: Anschlag
- 314: Verbindungskanal
- 315: Rückschlagventilanschlag
- 317: Rückschlagventilsitz
- 320: Rückschlagventil
- 321: Rückschlagventil-Sitzkolben
- 323: Rückschlagventilfeder
- 324: Rückschlagventilraum
- 330: Gehäuse
- 335: Kupplungskanal
- 336: Versorgungsdruckkanal
- 337: Schaltdruckkanal
- 339: Ventilsitz
- 341: Kolbenabschnitt
- 342: Kolbenabschnitt
- EDS: Schaltdrucksteuerung
- HCU: elektrohydraulische Steuerungseinheit
- K: Kupplung
- P: Pumpe
- p_HCU: Steuerdruck
- p_K: Kupplungsdruck
- p_K*: Kupplungsdruckwert
- p_S: Schaltdruck
- p_0: Entlüftungsdruck, Umgebungsdruck

## Patentansprüche

1. Hydraulische Steuerungseinrichtung für ein Automatikgetriebe, mindestens eine Ventileinrichtung (1) aufweisend, die Ventileinrichtung (1) umfassend ein Schaltventil (10), ein Schaltglied (11) aufweisend, und ein Rückschlagventil (20), wobei das Schaltventil (10) in einem Gehäuse (30) ausgebildet ist und mit einer ersten (HCU) und einer zweiten Druckstelleinrichtung (EDS) sowie einem Schaltelement (K) zur Übertragung eines Drehmoments hydraulisch verbunden ist, wobei die Druckstelleinrichtungen (HCU, EDS) von mindestens einer Pumpe (P) mit einem Druckmedium versorgt werden und wobei unter der Wirkung eines von der zweiten Druckstelleinrichtung (EDS) erzeugten Schaltdruckes (p_S) auf das Schaltglied (11) dieses in eine erste Schaltstellung bewegbar ist, in welcher die erste Druckstelleinrichtung (HCU) durch das Schaltventil (10) mit dem Schaltelement (K) hydraulisch verbunden ist, und wobei bei einem Schaltdruck (p_S) unterhalb eines bestimmten Wertes sich das Schaltglied (11) in einer zweiten Schaltstellung befindet, in welcher der Zustrom von der ersten Druckstelleinrichtung (HCU) zum Schaltelement (K) unterbrochen ist, und wobei das Rückschlagventil (20) derart angeordnet ist, dass es in der zweiten Schaltstellung des Schaltgliedes von der Seite des Schaltelements (K) her zu einem entlüfteten Bereich der hydraulischen Steuerungseinrichtung hin durchströmbar ist, **dadurch gekennzeichnet, dass** das Schaltventil (10) als Wegesitzventil ausgebildet ist, wobei das Rückschlagventil (20) in dem Schaltglied (11) des Schaltventils (10) angeordnet ist.

2. Hydraulische Steuerungseinrichtung nach Anspruch 1, **dadurch gekennzeichnet, dass** das Schaltglied als Sitzkolben (11) ausgebildet ist, welcher einen ersten und einen zweiten zylindrischen Kolbenabschnitt (41, 42) aufweist, wobei der erste Kolbenabschnitt (41) einen kleineren Durchmesser als der zweite Kolbenabschnitt (42) aufweist, und die sich aus der Differenz beider Durchmesser ergebende, sich radial ausdehnende Ringfläche zwischen den Kolbenabschnitten (41, 42) eine Schaltdruckfläche (18) bildet.

3. Hydraulische Steuerungseinrichtung nach Anspruch 2, **dadurch gekennzeichnet, dass** der Sitzkolben (11) in einer in dem Gehäuse (30) ausgebildeten Stufenbohrung (38) axial verschiebbar geführt ist, wobei der Sitzkolben (11) in der ersten Schaltstellung mit einem ersten Ende (45) an einem Anschlag (13) anliegt und in der zweiten Schaltstellung mit einem zweiten Ende (46) an einem in dem Gehäuse (30) ausgebildeten Ventilsitz (39) anliegt, und wobei die Stufenbohrung (38) im Wesentlichen radial mindestens von einem Kupplungskanal (35), einem Versorgungskanal (36) und einem Schaltdruckkanal (37) durchdrungen ist, wobei der Schaltdruckkanal (37) so angeordnet ist, dass die Schaltdruckfläche (18) des Sitzkolbens (11) in jeder axialen Stellung des Sitzkolbens (11) vom dem im Schaltdruckkanal (37) wirkenden Schaltdruck (p_S) beaufschlagbar ist.

4. Hydraulische Steuerungseinrichtung nach Anspruch 3, **dadurch gekennzeichnet, dass** das Schaltventil (10) neben dem Sitzkolben (11) eine Druckfeder (12) umfasst, welche zwischen dem Sitzkolben (11) und dem mit dem Gehäuse fest verbundenen Anschlag (13) angeordnet ist, wobei bei einer Druckbeaufschlagung der Schaltdruckfläche (18) durch den Schaltdruck (p_S) das Schaltglied (11) in Richtung einer Mittelachse (M) des Schaltventils (10) entgegen der Kraft einer Schaltventilfeder (12) gegen den gehäusefesten Anschlag (13) in die erste Schaltstellung verschiebbar ist, und wobei bei einem drucklosen Schaltdruckkanal (37), bzw. einer entlüfteten zweiten Druckstelleinrichtung (EDS) der Sitzkolben (11) aufgrund der Kraft der Schaltventilfeder (12) die zweite Schaltstellung einnimmt.

5. Hydraulische Steuerungseinrichtung nach Anspruch 1, **dadurch gekennzeichnet, dass** das Rückschlagventil (20) als Sitzventil ausgebildet ist, wobei dieses einen Rückschlagventil-Sitzkolben (21) und eine Rückschlagventilfeder (23) aufweist, und wobei die Rückschlagventilfeder (23, 323) zwischen einem Rückschlagventilanschlag (15, 315) und dem Rückschlagventil-Sitzkolben (21, 321) angeordnet ist, wodurch eine Schließkraft auf den Rückschlagventil-Sitzkolben (21, 321) in Richtung eines Rückschlagventilsitzes (17, 317) wirksam ist.

6. Hydraulische Steuerungseinrichtung nach Anspruch 1 und 5, **dadurch gekennzeichnet, dass** der Rückschlagventilanschlag (15) und der Rückschlagventilsitz (17) im Sitzkolben (11) des Schaltventils (10) ausgebildet sind.

7. Hydraulische Steuerungseinrichtung nach einem der vorangegangenen Ansprüche, **dadurch gekennzeichnet, dass** in der zweiten Schaltstellung des Sitzkolbens (11) das Rückschlagventil (20) oberhalb eines bestimmten Kupplungsdruckwertes (p_K*) von dem Schaltelement (K) je nach Anordnung des Rückschlagventils (20, 320) zur ersten oder zweiten Druckstelleinrichtung (EDS, HCU) hin durchströmbar ist, wenn der Druck (p_S, p_HCU) der jeweiligen Druckstelleinrichtung geringer ist als der Kupplungsdruck (p_K) oder dem Umgebungsdruck (p_0) entspricht, und dass das Rückschlagventil (20) gegen eine Strömung von der jeweiligen Druckstelleinrichtungen (EDS, HCU) zum Schaltelement (K) hin gesperrt ist.

8. Hydraulische Steuerungseinrichtung nach Anspruch 1 und einem der Ansprüche 2 bis 7, **dadurch gekennzeichnet, dass** in der zweiten Schaltstellung des Schaltventils (10) das Schaltelement (K) durch das vom Schaltelement (K) aus durchströmbare Rückschlagventil (20) und einen im Schaltglied (11) ausgebildeten Verbindungskanal (214) mit der zweiten, entlüfteten Druckstelleinrichtung (EDS) hydraulisch verbunden ist.

9. Hydraulische Steuerungseinrichtung nach Anspruch 1 und einem der Ansprüche 2 bis 7, **dadurch gekennzeichnet, dass** in der zweiten Schaltstellung des Schaltventils (10) das Schaltelement (K) durch das vom Schaltelement (K) aus durchströmbare Rückschlagventil (20) und einen im Schaltglied (11) ausgebildeten Verbindungskanal (14) mit der ersten, entlüfteten Druckstelleinrichtung (HCU) hydraulisch verbunden ist.

10. Automatikgetriebe mit einer hydraulischen Steuerungseinrichtung nach einem der vorangegangenen Ansprüche.

## Claims

1. Hydraulic control device for an automatic transmission, having at least one valve device (1), the valve device (1) comprising a switching valve (10), having a switching member (11), and a check valve (20), the switching valve (10) being configured in a housing (30) and being hydraulically connected to a first (HCU) and a second pressure setting device (EDS) and a switching element (K) for transmitting a torque, the pressure setting devices (HCU, EDS) being supplied with a pressure medium by at least one pump (P), and it being possible for the switching member (11) to be moved into a first switching position under the action of a switching pressure (p_S) on it which is generated by the second pressure setting device (EDS), in which first switching position the first pressure setting device (HCU) is connected hydraulically to the switching element (K) by way of the switching valve (10), and the switching member (11) being situated in a second switching position at a switching pressure (p_S) below a defined value, in which second switching position the inflow from the first pressure setting device (HCU) to the switching element (K) is interrupted, and the check valve (20) being arranged in such a way that, in the second switching position of the switching member, it can be flowed through from the side of the switching element (K) towards a ventilated region of the hydraulic control device, **characterized in that** the switching valve (10) is configured as a directional seat valve, the check valve (20) being arranged in the switching member (11) of the switching valve (10).

2. Hydraulic control device according to Claim 1, **characterized in that** the switching member is configured as a seat piston (11) which has a first and a second cylindrical piston section (41, 42), the first piston section (41) having a smaller diameter than the second piston section (42), and the radially extending annular face between the piston sections (41, 42) which results from the difference in both diameters forming a switching pressure face (18).

3. Hydraulic control device according to Claim 2, **characterized in that** the seat piston (11) is guided axially displaceably in a stepped bore (38) which is configured in the housing (30), the seat piston (11) bearing with a first end (45) against a stop (13) in the first switching position and bearing with a second end (46) against a valve seat (39) which is configured in the housing (30) in the second switching position, and the stepped bore (38) being penetrated substantially radially at least by a coupling channel (35), a supply channel (36) and a switching pressure channel (37), the switching pressure channel (37) being arranged in such a way that the switching pressure face (18) of the seat piston (11) can be loaded in every axial position of the seat piston (11) by the switching pressure (p_S) which acts in the switching pressure channel (37).

4. Hydraulic control device according to Claim 3, **characterized in that**, in addition to the seat piston (11), the switching valve (10) comprises a compression spring (12) which is arranged between the seat piston (11) and the stop (13) which is connected fixedly to the housing, it being possible, in the case of pressure loading of the switching pressure face (18) by way of the switching pressure (p_S), for the switching member (11) to be displaced in the direction of a centre axis (M) of the switching valve (10) into the first switching position, counter to the force of a switching valve spring (12) against the stop (13) which is fixed to the housing, and the seat piston (11) assuming the second switching position on account of the force of the switching valve spring (12) in the case of a pressureless switching pressure channel (37) and/or a ventilated second pressure setting device (EDS).

5. Hydraulic control device according to Claim 1, **characterized in that** the check valve (20) is configured as a seat valve, the said check valve (20) having a check valve seat piston (21) and a check valve spring (23), and the check valve spring (23, 323) being arranged between a check valve stop (15, 315) and the check valve seat piston (21, 321), as a result of which a closing force is active on the check valve seat piston (21, 321) in the direction of the check valve seat (17, 317).

6. Hydraulic control device according to Claims 1 and 5, **characterized in that** the check valve stop (15) and the check valve seat (17) are configured in the seat piston (11) of the switching valve (10).

7. Hydraulic control device according to one of the preceding claims, **characterized in that**, in the second switching position of the seat piston (11), the check valve (20) can be flowed through towards the first or second pressure setting device (EDS, HCU) from the switching element (K) above a defined coupling pressure value (p_K*), depending on the arrangement of the check valve (20, 320), if the pressure (p_S, p_HCU) of the respective pressure setting device is lower than the coupling pressure (p_K) or corresponds to the ambient pressure (p_0), and **in that** the check valve (20) is shut off against a flow from the respective pressure setting devices (EDS, HCU) towards the switching element (K).

8. Hydraulic control device according to Claim 1 and one of Claims 2 to 7, **characterized in that**, in the second switching position of the switching valve (10), the switching element (K) is connected hydraulically to the second, ventilated pressure setting device (EDS) by way of the check valve (20) which can be flowed through from the switching element (K) and a connecting channel (214) which is configured in the switching member (11).

9. Hydraulic control device according to Claim 1 and one of Claims 2 to 7, **characterized in that**, in the second switching position of the switching valve (10), the switching element (K) is connected hydraulically to the first, ventilated pressure setting device (HCU) by way of the check valve (20) which can be flowed through from the switching element (K) and a connecting channel (14) which is configured in the switching member (11).

10. Automatic transmission having a hydraulic control device according to one of the preceding claims.

## Revendications

1. Dispositif de commande hydraulique pour une transmission automatique, présentant au moins un dispositif de soupape (1), le dispositif de soupape (1) comprenant une soupape de commutation (10) présentant un organe de commutation (11), et un clapet antiretour (20), la soupape de commutation (10) étant réalisée dans un boîtier (30) et étant connectée hydrauliquement à un premier dispositif de commande de pression (HCU) et à un deuxième dispositif de commande de pression (EDS), ainsi qu'à un élément de commutation (K) pour le transfert d'un couple, les dispositifs de commande de pression (HCU, EDS) étant alimentés par au moins une pompe (P) en un fluide sous pression et, sous l'effet d'une pression de commutation (p_S) produite par le deuxième dispositif de commande de pression (EDS) appliquée à l'organe de commutation (11), celui-ci pouvant être déplacé dans une première position de commutation dans laquelle le premier dispositif de commande de pression (HCU) est connecté hydrauliquement par la soupape de commutation (10) à l'élément de commutation (K), et, dans le cas d'une pression de commutation (p_S) en dessous d'une valeur déterminée, l'organe de commutation (11) se trouvant dans une deuxième position de commutation dans laquelle l'écoulement du premier dispositif de commande de pression (HCU) à l'élément de commutation (K) est interrompu, et le clapet antiretour (20) étant disposé de telle sorte qu'il puisse être parcouru par l'écoulement dans la deuxième position de commutation de l'organe de commutation, depuis le côté de l'élément de commutation (K) vers une région désaérée du dispositif de commande hydraulique, **caractérisé en ce que** la soupape de commutation (10) est réalisée sous forme de distributeur à siège, le clapet antiretour (20) étant disposé dans l'organe de commutation (11) de la soupape de commutation (10).

2. Dispositif de commande hydraulique selon la revendication 1, **caractérisé en ce que** l'organe de commutation est réalisé sous forme de piston à siège (11) qui présente une première et une deuxième portion de piston cylindrique (41, 42), la première portion de piston (41) présentant un plus petit diamètre que la deuxième portion de piston (42), et la surface annulaire s'étendant radialement, résultant de la différence des deux diamètres, formant entre les portions de piston (41, 42) une surface de pression de commutation (18).

3. Dispositif de commande hydraulique selon la revendication 2, **caractérisé en ce que** le piston à siège (11) est guidé de manière déplaçable axialement dans un alésage étagé (38) réalisé dans le boîtier (30), le piston à siège (11) s'appliquant dans la première position de commutation avec une première extrémité (45) contre une butée (13) et s'appliquant dans la deuxième position de commutation avec une deuxième extrémité (46) contre un siège de soupape (39) réalisé dans le boîtier (30), et l'alésage étagé (38) étant traversé essentiellement radialement au moins par un canal d'accouplement (35), un canal d'alimentation (36) et un canal de pression de commutation (37), le canal de pression de commutation (37) étant disposé de telle sorte que la surface de pression de commutation (18) du piston à siège (11) puisse être sollicitée dans chaque position axiale du piston à siège (11) par la pression de commutation (p_S) agissant dans le canal de pression de commutation (37).

4. Dispositif de commande hydraulique selon la revendication 3, **caractérisé en ce que** la soupape de commutation (10) comprend, en plus du piston à siège (11), un ressort de pression (12) qui est disposé entre le piston à siège (11) et la butée (13) connectée fixement au boîtier, l'organe de commutation (11), dans le cas d'une sollicitation en pression de la surface de pression de commutation (18) par la pression de commutation (p_S), pouvant être déplacé dans la première position de commutation dans la direction d'un axe médian (M) de la soupape de commutation (10) à l'encontre de la force d'un ressort de soupape de commutation (12) contre la butée (13) fixée au boîtier, et, dans le cas d'un canal de pression de commutation (37) sans pression, respectivement d'un deuxième dispositif de commande de pression (EDS) désaéré, le piston à siège (11) adoptant la deuxième position de commutation sous l'effet de la force du ressort de soupape de commutation (12).

5. Dispositif de commande hydraulique selon la revendication 1, **caractérisé en ce que** le clapet antiretour (20) est réalisé sous forme de soupape à siège, celle-ci présentant un piston à siège de clapet antiretour (21) et un ressort de clapet antiretour (23), et le ressort de clapet antiretour (23, 323) étant disposé entre une butée de clapet antiretour (15, 315) et le piston à siège de clapet antiretour (21, 321), de sorte qu'une force de fermeture agisse sur le piston à siège de clapet antiretour (21, 321) dans la direction d'un siège de clapet antiretour (17, 317).

6. Dispositif de commande hydraulique selon les revendications 1 et 5, **caractérisé en ce que** la butée de clapet antiretour (15) et le siège de clapet antiretour (17) sont réalisés dans le piston à siège (11) de la soupape de commutation (10).

7. Dispositif de commande hydraulique selon l'une quelconque des revendications précédentes, **caractérisé en ce que** dans la deuxième position de commutation du piston à siège (11), le clapet antiretour (20), au-dessus d'une valeur de pression d'accouplement déterminée (p_K*), peut être parcouru par l'écoulement depuis l'élément de commutation (K), en fonction de l'agencement du clapet antiretour (20, 320), vers le premier ou le deuxième dispositif de commande de pression (EDS, HCU), lorsque la pression (p_S, p_HCU) du dispositif de commande de pression respectif est inférieure à la pression d'accouplement (p_K) ou à la pression ambiante (p_0), et **en ce que** le clapet antiretour (20) est bloqué contre un écoulement depuis les dispositifs de commande de pression respectifs (EDS, HCU) vers l'élément de commutation (K).

8. Dispositif de commande hydraulique selon la revendication 1 et selon l'une quelconque des revendications 2 à 7, **caractérisé en ce que** dans la deuxième position de commutation de la soupape de commutation (10), l'élément de commutation (K) est connecté hydrauliquement au deuxième dispositif de commande de pression désaéré (EDS) par le clapet antiretour (20) pouvant être parcouru par l'écoulement depuis l'élément de commutation (K) et par un canal de connexion (214) réalisé dans l'organe de commutation (11).

9. Dispositif de commande hydraulique selon la revendication 1 et selon l'une quelconque des revendications 2 à 7, **caractérisé en ce que** dans la deuxième position de commutation de la soupape de commutation (10), l'élément de commutation (K) est connecté hydrauliquement au premier dispositif de commande de pression désaéré (HCU) par le clapet antiretour (20) pouvant être parcouru par l'écoulement depuis l'élément de commutation (K) et par un canal de connexion (14) réalisé dans l'organe de commutation (11).

10. Transmission automatique comprenant un dispositif de commande hydraulique selon l'une quelconque des revendications précédentes.
